# EUROPEAN PATENT SPECIFICATION

(11) **EP 4 261 721 B1**
(45) Date of publication and mention of the grant of the patent: **12.06.2024**
(21) Application number: 22167900.4
(22) Date of filing: 12.04.2022
(51) Int. Cl.: G06F 21/60, G06F 21/62

(54) **METHOD AND DEVICES FOR DETERMINING DATA ACCESS RESTRICTIONS**
VERFAHREN UND VORRICHTUNGEN ZUR BESTIMMUNG VON DATENZUGRIFFSBESCHRÄNKUNGEN
PROCÉDÉ ET DISPOSITIFS PERMETTANT DE DÉTERMINER DES RESTRICTIONS DE L'ACCÈS AUX DONNÉES

(43) Date of publication of application: 18.10.2023
(73) Proprietor: Helsing GmbH, 81671 Munich (DE)
(72) Inventor: Adler, Antonia, 81671 Munich (DE); Dubinska, Maja, 81671 Munich (DE); Schneider, Manuel, 81671 Munich (DE); Gendre, Maxime, 81671 Munich (DE); Turner, Theo, 81671 Munich (DE)
(74) Representative: Rummler, Felix

(56) References cited:
- US-A1- 2008 222 719
- US-A1- 2021 029 108
- US-B2- 9 276 939

## Description

### BACKGROUND OF THE INVENTION

In many scenarios, access control to sensitive data is of high importance. This is particularly true for multiuser data platforms on which different users have different access authorisations to create, manage, read, amend or otherwise use data stored on the data platform. However, existing approaches of defining and setting access authorisations or access restrictions to newly created data or datasets for each of a plurality of different users are time consuming and/or prone to error or tampering. Thereby, data security may be weakened, which can have severe consequences, in particular in the military or defence domain. Therefore, there is a need for computer implemented methods and systems that overcome the before-mentioned deficiencies.

In US 2021/029108 A1, a method is described in which a user with access to a primary asset seeks access to a related supplementary asset. When a sufficient proof of access to the primary asset is provided, and the relationship of the primary and supplementary assets is recognized, access to the supplementary asset is granted without requiring a separate sign-in, a permission query to the supplementary asset's owner, or an authorization through an authenticated identity of the requestor.

### SUMMARY

The present invention, which is defined by the appended claims, provides a computer implemented solution for determining data access restrictions, in particular to data accessible via a multiuser data platform, in a more effective and more reliable manner.

According to the invention, there is provided a computer implemented method for determining data access restrictions, the method comprising: determining a first access restriction to first data; determining a data provenance of second data, the determined data provenance indicating a dependency of the second data on the first data; and determining, based on the data provenance and the first access restriction, a second access restriction to the second data. data, whereby determining the first access restriction comprises monitoring the first access restriction; and determining the second access restriction comprises dynamically determining the second access restriction based on the monitored first access restriction.

The first and second data may, for example, comprise data representing a machine learning, ML, model or a dataset. The dataset may comprise or represent training data used to train the ML model. In an embodiment, the first data may represent the dataset, the second data may represent the ML model or vice versa. In another embodiment, the first data may represent a first ML model, the second data may represent a second ML model, e.g. a previous version of the first ML model. The data provenance of the second data indicates a dependency of the second data on the first data. In one embodiment, the first data comprises source or origin data of the second data.

By determining the second access restriction based on the data provenance and the first access restriction, an automatic approach is provided that is implantable and/or verifiable in an effective and reliable way.

According to an embodiment, the data provenance of the second data indicates one or more of a plurality of dependency types of the second data on the first data, and wherein the second access restriction is determined based on the indicated dependency type.

Based on the dependency type, it may be determined if, how or to what extent the first data is accessible via the second data. For example, the second data may be a copy of the first data. In another example, the second data may comprise statistics of a training process of a model represented by the first data that may or may not disclose at least a part of the first data. Hence, different access restrictions to the second data may be determined depending on the confidentiality of the second data, the confidentiality being determined based on the type of dependency on the first data. Thereby, the second access restriction can be determined and adapted in a more flexible and/or appropriate way.

According to an embodiment, determining the data provenance of the second data comprises determining a provenance graph of the second data.

The provenance graph may comprise and/or indicate different dependencies, in particular generations of dependencies, of the second data. Based on the provenance graph, a plurality of first data or datasets may be determined. The access restriction of an original or earliest first data may then propagate from the original or earliest first data to the second data, thereby ensuring a consistent and secure access control to sensitive data.

According to an embodiment, the provenance graph comprises one or more provenance edges indicative of the dependency, in particular the dependency type, of the second data on the first data.

The provenance may be a set of provenance nodes, wherein the dependencies or (inter)relations of the provenance nodes may be indicated by provenance edges. In other words: The provenance nodes are connected via provenance edges or, put differently, the provenance edges may comprise links between the provenance nodes. The provenance nodes and provenance edges may be included in, or form, a provenance graph. The provenance nodes may comprise information (items), including data, datasets, models, metrics, etc. The provenance edges may be labelled. The labels may indicate the dependency type of the second data on the first data. This enables an effective way of determining the type of dependency and/or of implementing the method.

According to an embodiment, the first access restriction is determined based on stored first metadata associated with the first data, the method further comprising: determining, and preferably storing, second metadata associated with the second data, wherein the second metadata is indicative of, in particular comprises, the determined data provenance, the first access restriction and/or the second access restriction.

The first and second metadata may be included in the first and second data, respectively, or may be separately stored. With every data or dataset, a data provenance associated with the data may be stored. Thereby, access restrictions to new data originating from previous data may be directly and consistently determined for all stored data.

According to an embodiment, the method further comprises: controlling access to the second data based on the second access restriction, in particular denying a read access to the second data and/or allowing a discovery access to the second data, wherein the discovery access enables a user to find the second data and/or to read second metadata of the second data, preferably the above defined second metadata.

Without having read access to certain data, the user may still be enabled to view the existence of the certain data. This may be of particular interest for training a ML model based on sensitive training data for which a user or developer of the model has no access authorisation. A user may thus be enabled to train the model and access metadata of the trained model, e.g. training statistics, without having read access to the training data and, in particular, to the trained model, as the trained model may have the same access restrictions as the training data on which it depends.

According to an embodiment, the method further comprises determining a third access restriction to third data, wherein the determined data provenance indicates a dependency of the second data on the third data; determining which of the first and third access restrictions represents a stricter access restriction and/or determining a combined access restriction based on the first and third access restriction; and determining, based on the data provenance and the stricter access restriction and/or the combined access restriction, a the second access restriction to the second data.

In this manner, it can be ensured that the strictest access restriction is applied, hence data security is maintained throughout the provenance graph. For example, a user may have read access to a ML model, but may not have read access, in particular may only have discovery access, to training data of the ML model. Hence, consequently, the user may not have read access and may only have discovery access to the ML model after being trained with the training data. Additionally, or alternatively, a first user may have read access to the ML model, but may not have read access, in particular may only have discovery access, to the training data, whereas a second user may have read access to the training data, but may not have read access, in particular may only have discovery access, to the ML model. Consequently, based on the combined access restriction, the first and second user may both not have read access and may both only have discovery access to the ML model after being trained with the training data.

According to the invention, determining the first access restriction comprises monitoring the first access restriction; and determining the second access restriction comprises dynamically determining the second access restriction based on the monitored first access restriction.

In other words: Inherited access restrictions are determined and/or adjusted dynamically. For example, a change of the first access restriction may be monitored; and the second access restriction may be dynamically determined based on the monitored change of the first access restriction. As such, changes of access restrictions on the first data are taking immediate effect on the access restriction of the second data. Thereby, the method enables determining access restrictions in a more flexible, yet consistent way.

According to the invention, there is provided a data processing apparatus comprising means for carrying out the above described method.

According to the invention, there is provided a computer program comprising instructions which, when the program is executed by a computer, cause the computer to carry out the above described method.

According to the invention, there is provided a computer-readable medium comprising instructions which, when executed by a computer, cause the computer to carry out the above described method.

### BRIEF DESCRIPTION OF THE DRAWINGS

The present invention may be better understood from reading the following description of non-limiting embodiments, with reference to the attached drawings, wherein:
Fig. 1 shows a flowchart of a computer implemented method for determining data access restrictions according to one or more preferred embodiments;
Fig. 2 shows a flow chart of a computer implemented method for determining metadata and/or controlling data access that may be performed subsequent to the method for determining data access restrictions;
Fig. 3A shows a first provenance graph indicating the dependency of a plurality of data or datasets via a plurality of edges interconnecting the plurality of data;
Fig. 3B shows a second provenance graph indicating a different dependency of the plurality of data or datasets via the plurality of provenance edges interconnecting the plurality of data; and
Fig. 4 shows a data-processing apparatus 400 configured to carry out any of the method steps described with reference to figures 1 to 3.

### DETAILLED DESCRIPTION OF THE PREFERRED EMBODIMENTS

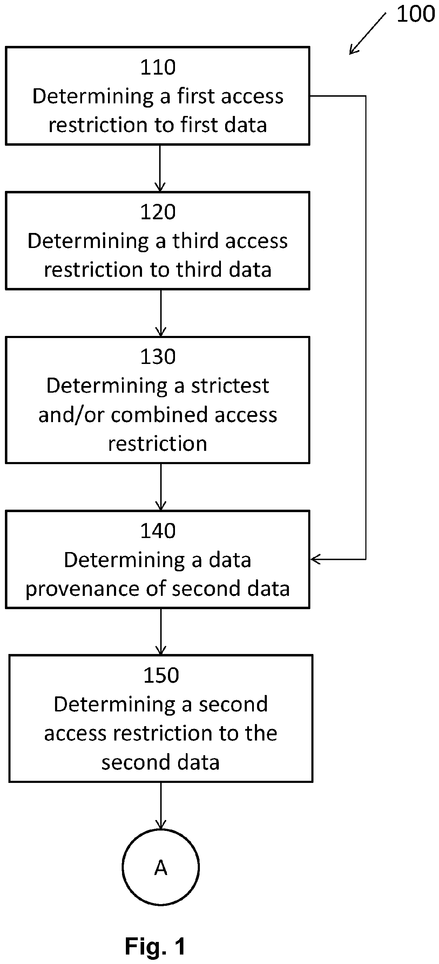

**Figure 1** shows a flowchart of a computer implemented method 100 for determining data access restrictions according to one or more preferred embodiments.

In step 110, a first access restriction to first data is determined. The first data may be stored on a multiuser platform. The first access restriction may indicate what kind of access to first data is provided to a specific user of the multiuser platform. Different kinds of access may include write access, read access and/or discovery access. A user having discovery access may only see that the first data exists and/or may only have read and/or write access to (meta)data associated with the first data without having read and/or write data to the first data. An access restriction may also be defined via a corresponding access authorisation.

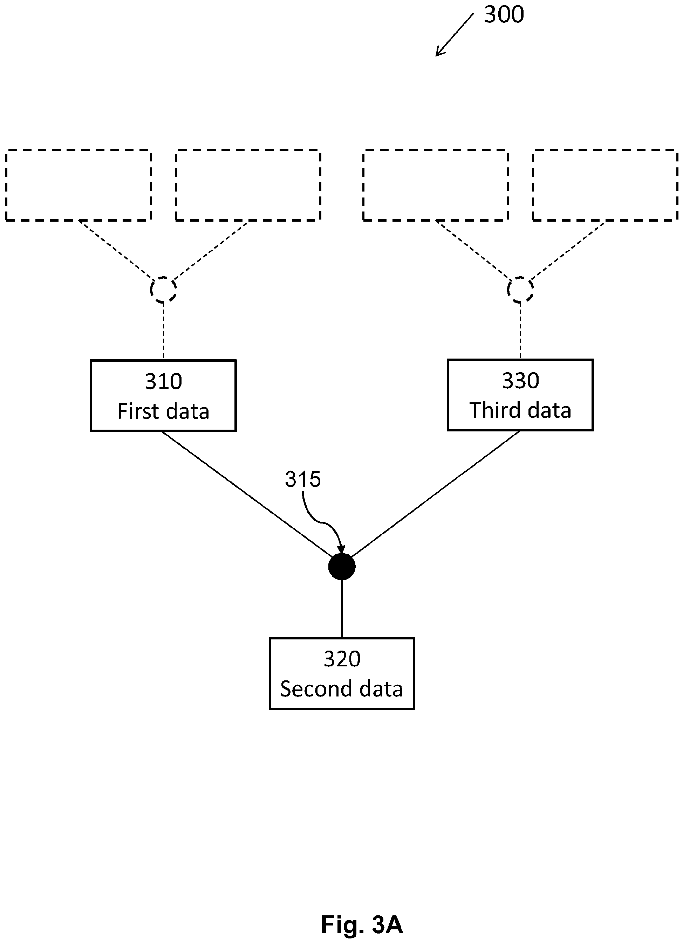

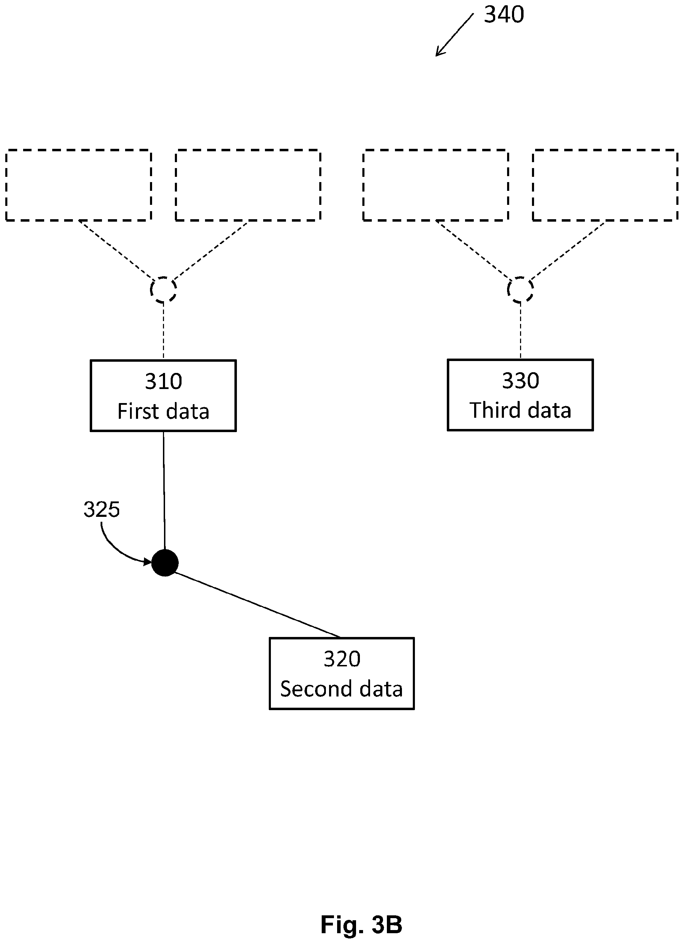

In step 140 that may be performed subsequent to step 110, a data provenance of second data is determined. The second data may be newly added to the multiuser platform. More particularly, the second data may have been added to the multiuser platform subsequent to the addition of the first data to the multiuser platform. Determining the data provenance of the second data comprises the determination of how the second data depends on the first data. In a preferred embodiment, the provenance of the second data is determined based on a provenance graph, as explained in more detail below with reference to figure 3.

Based on the determined provenance of the second data and the first access restriction to the first data, a second access restriction to the second data is determined in step 150. The method steps illustrated and described herein with reference to any of the figures may be performed in a different order. For example, the determination of the second access restriction in step 150 may comprise or may trigger the determination of the data provenance in step 140. The determination of the first access restriction to the first data in step 110 may be performed in response to a determination that the determined data provenance indicates a dependency of the second data on the first data.

The data provenance determined in step 140 may further indicate whether are not the second data depends on third data different from the first data, in particular how the second data depends on the first and/or the third data. Consequently, subsequent to step 110, a third access restriction to the third data may be determined in step 120.

In step 130, it is determined how the first and third access restrictions apply to the second data. In other words a combined access restriction is determined. In one example, the most strict (or less strict) access restriction of the first and third access restriction is determined in step 130 as the combined access restriction. In another example, a combined access restriction comprising all or parts of the first and third access restrictions is determined.

The determination of the second access restriction in step 150 may thus be based on the data provenance of the second data, the first access restriction and the third access restriction. More particular, the determination of the second access restriction in step 150 may be based on the data provenance of the second data and the combined, e.g. strictest, access restriction determined in step 130.

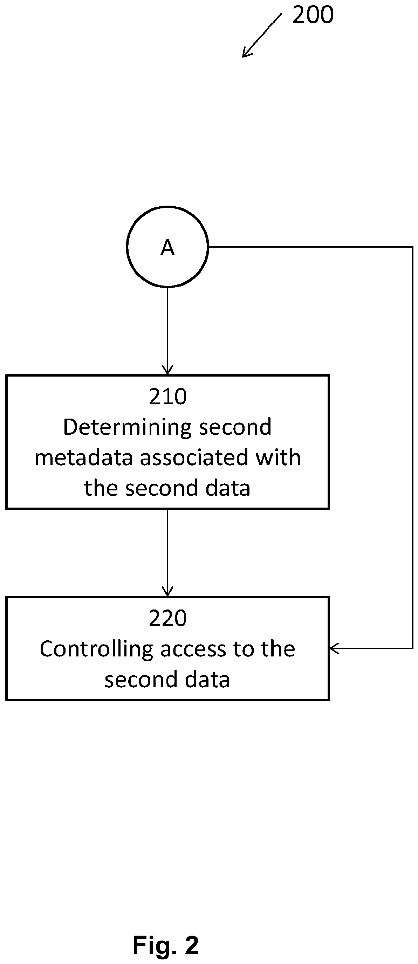

**Figure 2** shows a flowchart of a computer implemented method 200 for determining metadata and/or controlling data access. The method 200 comprises steps 210 and 220 that may be performed in response to one or more of the method steps of method 100 described with reference to figure 1.

The first access restriction to the first data determined in step 110 of figure 1 may be determined based on first metadata associated with the first data. In other words: The first access restriction may be indicated by the first metadata. Put in yet another way: The first metadata may comprise an indicator of the (type of) access restriction to the first data. The first metadata may be stored together with the first data on the same (multiuser) platform. The first metadata may be included in the first data. Alternatively, or additionally, the first metadata may be stored and and/or be accessible separately.

In step 210, second metadata associated with the second data may be determined and, preferably, stored and/or accessed. The storing or accessing of the second metadata may be performed in the same or a similar way as the storing or accessing of the first metadata. The second metadata may indicate the second access restriction determined in step 150 of figure 1 in the same or a similar way as the first metadata may indicate the first access restriction. Hence, the (multiuser) platform may comprise, i.e. have stored thereon, respective metadata for each of the stored data or dataset, the respective metadata indicating a respective data provenance and/or an access restriction of the respective data or the data origin.

In step 220, access to the second data is controlled in accordance with the second access restriction determined in step 150 of figure 1. Controlling access to the second data may comprise restricting or denying access to the second data, in particular restricting or denying write and/or read access to the second data. For example, controlling access to the second data may comprise enabling a discovery access to the second data, wherein the discovery access enables a user (only) to find the second data and/or (only) to read second metadata of the second data, in particular without having read or write access to the second data.

**Figure 3A** shows a first provenance graph 300 indicating the dependency of a plurality of provenance nodes representing or comprising data or datasets, via a plurality of provenance edges interconnecting the plurality of provenance nodes, e.g. data. More particularly, the provenance graph 300 indicates that the second data 320 depends on the first data 310 and third data 330. In the illustrated provenance graph 300, the first data 310 and the third data 330 are combined via a first provenance edge 315 to result in the second data 320. For example, the first data 310 represents a machine learning, ML, model, wherein the third data 330 represents training data to train the ML model represented by the first data 310. The first provenance edge 315 may thus represent or indicate a training process of the ML model with the training data.

In one example, the second data 320 represents the trained ML model. The first provenance edge 315 may indicate that the output of the first provenance edge 315, i.e. the second data 320, represents a trained ML model based on a previous (pretrained) ML model and on respective training data. The first provenance edge 315 may further indicate how access restrictions to the inputs of the first provenance edge 315, i.e. the first data 310 and the third data 330, propagate through the first provenance edge 315, i.e. are applied to the output of the first provenance edge 315.

For example, the first provenance edge 315 may indicate that the strictest access restriction of the first access restriction to the first data 310 and the third access restriction to the third data 330 is to be applied to the second data 320, in particular for each user of the multiuser platform. In other words: If a certain user of the multiuser platform has read access to the first data 310 and only has discovery access to the third data 330, the certain user only has discovery access to the second data 320 without having read access to the second data 320, if the first provenance edge 315 indicates the propagation of the strictest access restriction. In another example, the first provenance edge 315 may indicate that the first access restriction and the third access restriction are combined. In other words: If a first user is restricted from accessing the first data 310 and a second user is restricted from accessing the third data 330, both the first and second users are restricted from accessing the second data 320.

In yet another example, the first provenance edge 315 may not indicate that the first access restriction to the first data 310 propagates through the first access edge 315, i.e. applies to the second data 320. The dependency of the second data 320 on the first data 310 may be such that the first data 310 or a sensible part of the first data 310 is not derivable from the second data 320. In the absence of said indication, the first access restriction may not apply or be applied to the second data 320. Alternatively, such a dependency of the second data 320 on the first data 310 may likewise be indicated by the first provenance edge 315.

**Figure 3B** shows a second provenance graph 340 indicating a different dependency of the plurality of provenance nodes representing or comprising data or datasets, via a plurality of provenance edges interconnecting the plurality of provenance nodes, e.g. data. In the illustrated example, the second data 320 or a part of the second data 320 depends on the first data 310 without depending on the third data 330, as indicated by a second provenance edge 325. The second provenance edge 325 may, similar to the first provenance edge 315, indicate the dependency of the second data 320 on the first data 310 and/or may, similar to the first provenance edge 315, indicate an access restriction propagation via the second provenance edge 325. For example, the second data 320 may be a copy of the first data 310. In that case, the access restriction to the first data 310 may also apply to the second data 320, which is indicated by provenance edge 325. If, however the first data 310, or a sensible part of the first data 310, is not derivable from the second data 320 due to the type of dependency of the second data 320 on the first data 310, the first access restriction may not apply to the second data 320, i.e. may not propagate through the second provenance edge 325.

The type of dependency or type of access restriction propagation may be indicated by labels comprised by the provenance graph 300, in particular comprised by the edges of the provenance graph 300. As illustrated via dashed lines, the provenance graph 300 may indicate the dependency of the first data 310 and the third data 330 on further first or third data via further provenance nodes and edges. The first data 310 may be different from the further first data and may depend on the further first data. The first access restriction may be determined based on further first access restrictions to the further first data and the (type of) dependency of the first data 310 on the further first data.

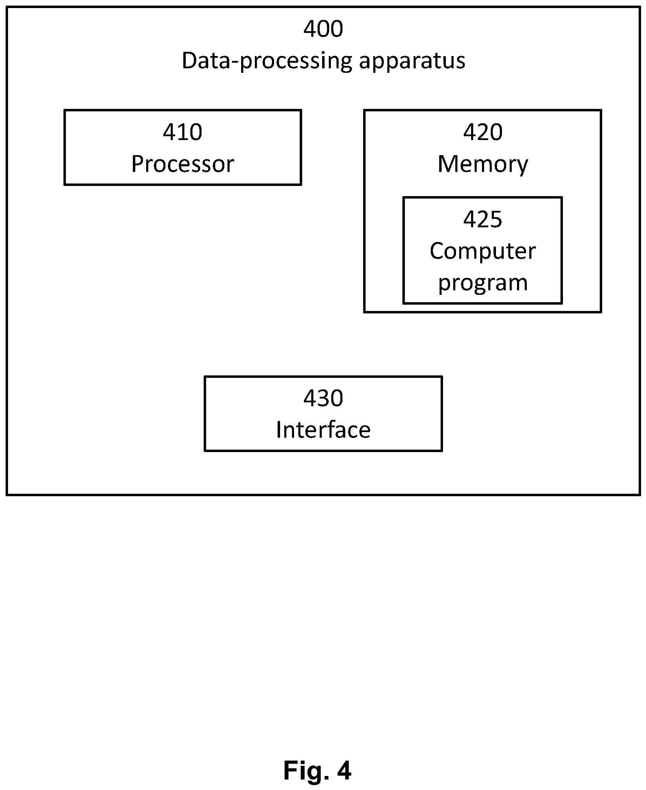

**Figure 4** shows a data-processing apparatus 400 configured to carry out any of the method steps described with reference to figures 1 to 3. To this end, the data-processing apparatus may comprise a processor 410 and a memory or computer readable medium 420. The first, second and third data as well as the respective metadata may be stored on the memory 420.

A computer program 425 is stored on the memory 420. The computer program 425 may comprise instructions which, when the program is executed by a computer, in particular by the data-processing apparatus 400, cause the computer or data-processing apparatus 400 to carry out any of the methods steps described with reference to figures 1 to 3.

The data-processing apparatus 400 may further comprise an interface 430. The interface 430 may connect other components of the data-processing apparatus 400, e.g. the processor 410 and the memory 420, and/or provide connection to other components being communicatively coupled to the data-processing apparatus 400.

## Claims

1. A computer implemented method for determining data access restrictions, the method comprising:
determining (110) a first access restriction to first data;
determining (140) a data provenance of second data, the determined data provenance indicating a dependency of the second data on the first data; and
determining (150), based on the data provenance and the first access restriction, a second access restriction to the second data;
**characterized in that**
determining the first access restriction comprises monitoring the first access restriction; and
determining the second access restriction comprises dynamically determining the second access restriction based on the monitored first access restriction.

2. The method according to claim 1, wherein the data provenance of the second data indicates one or more of a plurality of dependency types of the second data on the first data, and wherein the second access restriction is determined based on the indicated dependency type.

3. The method according to any of the preceding claims, wherein determining the data provenance of the second data comprises determining a provenance graph (300) of the second data.

4. The method according to claim 3, wherein the provenance graph comprises one or more provenance edges (315; 325) indicative of the dependency, in particular the dependency type, of the second data on the first data.

5. The method according to any of the preceding claims, wherein the first access restriction is determined based on stored first metadata associated with the first data and wherein the method further comprises:
determining (210), and preferably storing, second metadata associated with the second data, wherein the second metadata is indicative of, in particular comprises, the determined data provenance, the first access restriction and/or the second access restriction.

6. The method according to any of the preceding claims, further comprising:
controlling (220) access to the second data based on the second access restriction, in particular denying a read access to the second data and/or allowing a discovery access to the second data, wherein the discovery access enables a user to find the second data and/or to read second metadata of the second data, preferably the second metadata according to claim 5.

7. The method according to any of the preceding claims, further comprising:
determining (120) a third access restriction to third data, wherein the determined data provenance indicates a dependency of the second data on the third data;
determining (130), which of the first and third access restrictions represents a stricter access restriction and/or determining a combined access restriction based on the first and third access restriction;
determining (150), based on the data provenance and the stricter access restriction and/or the combined access restriction, a second access restriction to the second data.

8. A data processing apparatus (400) comprising means for carrying out the method of any of the preceding claims.

9. A computer program (425) comprising instructions which, when the program is executed by a computer, cause the computer to carry out the method of any of claims 1-7.

10. A computer-readable medium (420) comprising instructions which, when executed by a computer, cause the computer to carry out the method of any of claims 1-7.

## Patentansprüche

1. Computerimplementiertes Verfahren zum Bestimmen von Datenzugriffsbeschränkungen, wobei das Verfahren Folgendes beinhaltet:
Bestimmen (110) einer ersten Zugriffsbeschränkung auf erste Daten;
Bestimmen (140) einer Datenherkunft von zweiten Daten, wobei die bestimmte Datenherkunft eine Abhängigkeit der zweiten Daten von den ersten Daten anzeigt; und
Bestimmen (150) einer zweiten Zugriffsbeschränkung auf die zweiten Daten auf der Basis der Datenherkunft und der ersten Zugriffsbeschränkung;
**dadurch gekennzeichnet, dass**
das Bestimmen der ersten Zugriffsbeschränkung das Überwachen der ersten Zugriffsbeschränkung beinhaltet; und
das Bestimmen der zweiten Zugriffsbeschränkung das dynamische Bestimmen der zweiten Zugriffsbeschränkung auf der Basis der überwachten ersten Zugriffsbeschränkung beinhaltet.

2. Verfahren nach Anspruch 1, wobei die Datenherkunft der zweiten Daten einen oder mehrere aus einer Mehrzahl von Abhängigkeitstypen der zweiten Daten von den ersten Daten anzeigt, und wobei die zweite Zugriffsbeschränkung auf der Basis des angezeigten Abhängigkeitstyps bestimmt wird.

3. Verfahren nach einem der vorherigen Ansprüche, wobei das Bestimmen der Datenherkunft der zweiten Daten das Bestimmen eines Herkunftsgraphen (300) der zweiten Daten beinhaltet.

4. Verfahren nach Anspruch 3, wobei der Herkunftsgraph einen oder mehrere Herkunftsränder (315; 325) umfasst, die die Abhängigkeit, insbesondere den Abhängigkeitstyp, der zweiten Daten von den ersten Daten anzeigen.

5. Verfahren nach einem der vorherigen Ansprüche, wobei die erste Zugriffsbeschränkung auf der Basis von mit den ersten Daten assoziierten gespeicherten ersten Metadaten bestimmt wird, und wobei das Verfahren ferner Folgendes beinhaltet:
Bestimmen (210), und vorzugsweise Speichern, von mit den zweiten Daten assoziierten zweiten Metadaten, wobei die zweiten Metadaten die bestimmte Datenherkunft, die erste Zugriffsbeschränkung und/oder die zweite Zugriffsbeschränkung anzeigen, insbesondere umfassen.

6. Verfahren nach einem der vorherigen Ansprüche, das ferner Folgendes beinhaltet:
Steuern (220) des Zugriffs auf die zweiten Daten auf der Basis der zweiten Zugriffsbeschränkung, insbesondere Verweigern eines Lesezugriffs auf die zweiten Daten und/oder Zulassen eines Entdeckungszugriffs auf die zweiten Daten, wobei der Entdeckungszugriff einen Benutzer befähigt, die zweiten Daten zu finden und/oder zweite Metadaten der zweiten Daten, vorzugsweise die zweiten Metadaten nach Anspruch 5, zu lesen.

7. Verfahren nach einem der vorherigen Ansprüche, das ferner Folgendes beinhaltet:
Bestimmen (120) einer dritten Zugriffsbeschränkung auf dritte Daten, wobei die bestimmte Datenherkunft eine Abhängigkeit der zweiten Daten von den dritten Daten anzeigt;
Bestimmen (130), welche der ersten und dritten Zugriffsbeschränkungen eine strengere Zugriffsbeschränkung darstellt und/oder Bestimmen einer kombinierten Zugriffsbeschränkung auf der Basis der ersten und dritten Zugriffsbeschränkung;
Bestimmen (150) einer zweiten Zugriffsbeschränkung auf die zweiten Daten auf der Basis der Datenherkunft und der strengeren Zugriffsbeschränkung und/oder der kombinierten Zugriffsbeschränkung.

8. Datenverarbeitungsvorrichtung (400), das Mittel zum Ausführen des Verfahrens nach einem der vorherigen Ansprüche umfasst.

9. Computerprogramm (425), das Befehle umfasst, die bei Ausführung des Programms durch einen Computer den Computer zum Durchführen des Verfahrens nach einem der Ansprüche 1-7 veranlassen.

10. Computerlesbares Medium (420), das Befehle umfasst, die bei Ausführung durch einen Computer den Computer zum Durchführen des Verfahrens nach einem der Ansprüche 1-7 veranlassen.

## Revendications

1. Un procédé mis en oeuvre par ordinateur de détermination de restrictions d'accès à des données, le procédé comprenant :
la détermination (110) d'une première restriction d'accès à des premières données,
la détermination (140) d'une provenance de données de deuxièmes données, la provenance de données déterminée indiquant une dépendance des deuxièmes données aux premières données, et
la détermination (150), en fonction de la provenance de données et de la première restriction d'accès, d'une deuxième restriction d'accès aux deuxièmes données,
**caractérisé en ce que**
la détermination de la première restriction d'accès comprend la surveillance de la première restriction d'accès, et
la détermination de la deuxième restriction d'accès comprend la détermination dynamique de la deuxième restriction d'accès en fonction de la première restriction d'accès surveillée.

2. Le procédé selon la Revendication 1, où la provenance de données des deuxièmes données indique un ou plusieurs types de dépendance d'une pluralité de types de dépendance des deuxièmes données aux premières données, et où la deuxième restriction d'accès est déterminée en fonction du type de dépendance indiqué.

3. Le procédé selon l'une quelconque des Revendications précédentes, où la détermination de la provenance de données des deuxièmes données comprend la détermination d'un graphe de provenance (300) des deuxièmes données.

4. Le procédé selon la Revendication 3, où le graphe de provenance comprend une ou plusieurs arêtes de provenance (315; 325) indicatives de la dépendance, plus particulièrement du type de dépendance, des deuxièmes données aux premières données.

5. Le procédé selon l'une quelconque des Revendications précédentes, où la première restriction d'accès est déterminée en fonction de premières métadonnées conservées en mémoire associées aux premières données et où le procédé comprend en outre :
la détermination (210), et de préférence la conservation en mémoire, de deuxièmes métadonnées associées aux deuxièmes données, où les deuxièmes métadonnées sont indicatives de, plus particulièrement comprennent, la provenance de données déterminée, la première restriction d'accès et/ou la deuxième restriction d'accès.

6. Le procédé selon l'une quelconque des Revendications précédentes, comprenant en outre :
la commande (220) de l'accès aux deuxièmes données en fonction de la deuxième restriction d'accès, plus particulièrement le refus d'un accès en lecture aux deuxièmes données et/ou l'autorisation d'un accès en découverte aux deuxièmes données, où l'accès en découverte permet à un utilisateur de trouver les deuxièmes données et/ou de lire des deuxièmes métadonnées des deuxièmes données, de préférence les deuxièmes métadonnées selon la Revendication 5.

7. Le procédé selon l'une quelconque des Revendications précédentes, comprenant en outre :
la détermination (120) d'une troisième restriction d'accès à des troisièmes données, où la provenance de données déterminée indique une dépendance des deuxièmes données aux troisièmes données,
la détermination (130) de la restrictions d'accès parmi la première et la troisième restriction d'accès qui représente une restriction d'accès plus stricte et/ou la détermination d'une restriction d'accès combinée en fonction des première et troisième restrictions d'accès,
la détermination (150), en fonction de la provenance de données et de la restriction d'accès plus stricte et/ou de la restriction d'accès combinée, d'une deuxième restriction d'accès aux deuxièmes données.

8. Un appareil de traitement de données (400) comprenant un moyen d'exécution du procédé selon l'une quelconque des Revendications précédentes.

9. Un programme informatique (425) comprenant des instructions qui, lorsque le programme est exécuté par un ordinateur, amènent l'ordinateur à exécuter le procédé selon l'une quelconque des Revendications 1 à 7.

10. Un support lisible par ordinateur (420) comprenant des instructions qui, lorsqu'elles sont exécutées par un ordinateur, amènent l'ordinateur à exécuter le procédé selon l'une quelconque des Revendications 1 à 7.
